# EUROPEAN PATENT APPLICATION

(11) **EP 3 726 163 A1**
(43) Date of publication of application: **21.10.2020**
(21) Application number: 17934766.1
(22) Date of filing: 15.12.2017
(51) Int. Cl.: F25B 47/02

(54) **REFRIGERATION CYCLE DEVICE**

(71) Applicant: Mitsubishi Electric Corporation, Tokyo 100-8310 (JP)
(72) Inventor: MAEYAMA, Hideaki, Tokyo 1008310 (JP); SAKAI, Akira, Tokyo 1008310 (JP)
(74) Representative: Pfenning, Meinig & Partner mbB
(86) International application number: PCT/JP2017/045084
(87) International publication number: WO 2019/116533

(57) **Abstract**

A refrigeration cycle apparatus according to the present invention has a heating mode and a defrosting mode as an operation mode. The refrigeration cycle apparatus includes a compressor (10), a first heat exchanger, a second heat exchanger, an expansion valve, and a controller. The compressor (10) is driven by a motor (12). In the compressor (10), refrigeration oil is stored. The controller drives the motor (12). In the heating mode, refrigerant (RL1) circulates sequentially through the compressor (10), the first heat exchanger, the expansion valve, and the second heat exchanger. The refrigerant (RL1) is smaller in density than refrigeration oil (RO1). Inside the compressor (10), the refrigerant (RL1) in a liquid phase and the refrigeration oil (RO1) are separated into two layers in the defrosting mode. The controller increases a heat loss of the motor (12) in the defrosting mode more than the heat loss in the heating mode.

## Description

### TECHNICAL FIELD

The present invention relates to a refrigeration cycle apparatus having a defrosting mode as an operation mode.

### BACKGROUND ART

Conventionally, a refrigeration cycle apparatus having a defrosting mode as an operation mode has been known. For example, Japanese Patent Laying-Open No. 59-221543 (PTL 1) discloses an air conditioning apparatus configured such that, in a defrosting operation, a drive voltage of a motor in a compressor is lowered from the voltage that achieves motor efficiency of a highest value, to increase the defrosting heat quantity, thereby shortening the time period required for defrosting.

### CITATION LIST

### PATENT LITERATURE

PTL 1: Japanese Patent Laying-Open No. 59-221543

### SUMMARY OF INVENTION

### TECHNICAL PROBLEM

In a defrosting mode, the quantity of heat of refrigerant is used for defrosting. Accordingly, the quantity of heat of the refrigerant suctioned into a compressor may often be smaller than that in the normal case. In the defrosting mode, the refrigerant is more likely to condense inside the compressor. When refrigeration oil stored in the compressor is diluted with the refrigerant in a liquid phase (liquid refrigerant), the lubricity of the refrigeration oil lowers. This results in a higher possibility that a slide portion of the compressor may be damaged.

The present invention has been made in order to solve the above-described problems. An object of the present invention is to improve the stability of a refrigeration cycle apparatus.

### SOLUTION TO PROBLEM

A refrigeration cycle apparatus according to the present invention has a heating mode and a defrosting mode as an operation mode. The refrigeration cycle apparatus includes a compressor, a first heat exchanger, a second heat exchanger, an expansion valve, and a controller. The compressor is configured to be driven by a motor. In the compressor, refrigeration oil is stored. The controller is configured to drive the motor. In the heating mode, refrigerant circulates sequentially through the compressor, the first heat exchanger, the expansion valve, and the second heat exchanger. The refrigerant is smaller in density than the refrigeration oil. In the compressor, the refrigerant in a liquid phase and the refrigeration oil are separated into two layers in the defrosting mode. The controller is configured to increase a heat loss of the motor in the defrosting mode more than the heat loss in the heating mode.

### ADVANTAGEOUS EFFECTS OF INVENTION

According to the refrigeration cycle apparatus in the present invention, the heat loss of the motor in the defrosting mode is increased more than the heat loss of the motor in the heating mode. Thereby, in the compressor in which refrigerant is smaller in density than refrigeration oil, and the refrigerant in a liquid phase and the refrigeration oil are separated into two layers, a decrease in lubricity of the refrigeration oil can be suppressed. As a result, the stability of the refrigeration cycle apparatus can be improved.

### BRIEF DESCRIPTION OF DRAWINGS

Fig. 1 is a functional block diagram showing the configuration of a refrigeration cycle apparatus according to the first embodiment.
Fig. 2 is a functional block diagram showing the functional configuration of a motor drive circuit in Fig. 1.
Fig. 3 is a diagram collectively showing GWP, a polytropic index, and a theoretical discharge temperature of each of R32, R410A, and R290.
Fig. 4 is a graph showing the relation between a drive voltage of a motor and motor efficiency at a constant rotation speed of the motor in Fig. 2.
Fig. 5 is a diagram collectively showing time charts of a drive voltage and induced electromotive force of the motor in a normal mode.
Fig. 6 is a diagram collectively showing time charts of the drive voltage and the induced electromotive force of the motor in a defrosting mode in the first embodiment.
Fig. 7 is a diagram showing the internal structure of a compressor in Fig. 1.
Fig. 8 is a diagram showing the internal structure of another example of the compressor in the refrigeration cycle apparatus according to the first embodiment.
Fig. 9 is a waveform diagram of a PWM signal in a normal mode in the third embodiment.
Fig. 10 is a waveform diagram of a PWM signal in a defrosting mode in the third embodiment.
Fig. 11 is a diagram collectively showing time charts of a load torque of the compressor, a generated torque of the motor in the normal mode, and a generated torque of the motor in the defrosting mode.

### DESCRIPTION OF EMBODIMENTS

The embodiments of the present invention will be hereinafter described in detail with reference to the accompanying drawings, in which the same or corresponding components will be designated by the same reference characters, and description thereof will not be basically repeated.

### First Embodiment

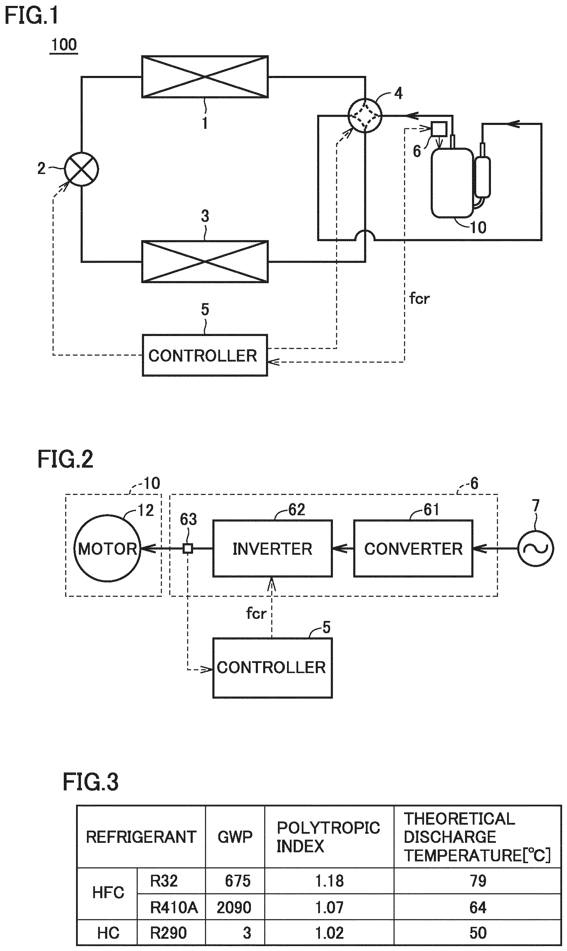

Fig. 1 is a functional block diagram showing the configuration of a refrigeration cycle apparatus 100 according to the first embodiment. In refrigeration cycle apparatus 100, refrigerant including R290 is used. As shown in Fig. 1, refrigeration cycle apparatus 100 includes a compressor 10, an outdoor heat exchanger 1, an expansion valve 2, an indoor heat exchanger 3, a four-way valve 4, a controller 5, and a motor drive circuit 6. Refrigeration cycle apparatus 100 operates in operation modes including a heating mode, a cooling mode, and a defrosting mode. In the following description, the heating mode and the cooling mode will be collectively referred to as a normal mode.

In the cooling mode and the defrosting mode, controller 5 controls four-way valve 4 to form a flow path such that refrigerant circulates sequentially through compressor 10, outdoor heat exchanger 1, expansion valve 2, and indoor heat exchanger 3. In the cooling mode and the defrosting mode, outdoor heat exchanger 1 functions as a condenser while indoor heat exchanger 3 functions as an evaporator.

In the heating mode, controller 5 controls four-way valve 4 to form a flow path such that refrigerant circulates sequentially through compressor 10, indoor heat exchanger 3, expansion valve 2, and outdoor heat exchanger 1. In the heating mode, indoor heat exchanger 3 functions as a condenser while outdoor heat exchanger 1 functions as an evaporator.

Compressor 10 suctions refrigerant in a gas phase (gas refrigerant) from a heat exchanger functioning as an evaporator, compresses the suctioned gas refrigerant, and then, discharges the compressed gas refrigerant to a heat exchanger functioning as a condenser. Compressor 10 is of a high-pressure shell type. Compressor 10 includes a motor to which a fixed winding is attached. Compressor 10 stores therein refrigeration oil for lubricating its compression mechanism. Controller 5 outputs a pulse width modulation (PWM) signal having a carrier frequency fcr to motor drive circuit 6 to inverter-control the rotation speed (the number of rotations) of the motor, thereby controlling the capacity (the amount of refrigerant discharged per unit time) of compressor 10.

Expansion valve 2 causes adiabatic expansion and decompression of the liquid refrigerant from the heat exchanger functioning as a condenser. Then, expansion valve 2 causes the refrigerant in a gas-liquid two-phase state (moist vapor) to flow into the heat exchanger functioning as an evaporator. The degree of opening of expansion valve 2 is adjusted by controller 5. The degree of opening of expansion valve 2 is adjusted to thereby adjust the temperature, the refrigerant flow rate, and the pressure of the heat exchanger. Expansion valve 2 includes a linear expansion valve (LEV), for example.

Fig. 2 is a functional block diagram showing the functional configuration of motor drive circuit 6. As shown in Fig. 2, motor drive circuit 6 includes a converter 61, an inverter 62, and a current sensor 63. Compressor 10 includes a motor 12. Motor 12 includes a three-phase motor, for example. Motor drive circuit 6 may be included in controller 5, or may be included in compressor 10. Controller 5 drives motor 12 through motor drive circuit 6.

Converter 61 receives alternating-current (AC) power from an AC power supply 7, converts the received AC power into direct-current (DC) power, and outputs the converted DC power to inverter 62. Inverter 62 includes an inverter main circuit including a plurality of switching elements (all components in inverter 62 are not shown). Inverter 62 receives a PWM signal having carrier frequency fcr from controller 5, and switches each of the switching elements to be turned on (conduction) or off (non-conduction), so as to output drive power (a drive current and a drive voltage) to motor 12. Current sensor 63 detects the drive current (for example, a three-phase current) output from inverter 62, and outputs the detected drive current to controller 5. Controller 5 analyzes the magnitude and the phase of the current from current sensor 63 to calculate the torque and the rotation speed of motor 12.

In the defrosting mode, the quantity of heat of refrigerant is used for defrosting. Accordingly, the quantity of heat of the refrigerant suctioned into compressor 10 is often smaller than usual. In the defrosting mode, refrigerant is more likely to condense inside compressor 10. When the refrigeration oil stored in compressor 10 is diluted with liquid refrigerant, the lubricity of the refrigeration oil decreases. This results in a higher possibility that the slide portion of compressor 10 may be damaged.

As in refrigeration cycle apparatus 100, from a viewpoint of global warming prevention, hydrocarbon (HC) refrigerant (for example, R290, R600, or R600A) may be used, which is lower in global warming potential (GWP) than hydro-fluorocarbon (HFC) refrigerant (for example, R32 or R410A). In general, HC refrigerant is smaller in polytropic index (for example, the polytropic index obtained by dividing the specific heat at constant pressure by specific heat at constant volume) than HFC refrigerant. It is known that, as the refrigerant has a smaller polytropic index, the theoretical temperature (theoretical discharge temperature) of this refrigerant discharged from compressor 10 becomes lower.

Fig. 3 is a diagram collectively showing GWP, a polytropic index, and a theoretical discharge temperature of each of R32, R410A, and R290. As shown in Fig. 3, R290 of the HC refrigerant is lower in GWP than R32 and R410A of the HFC refrigerant. Also, R290 is smaller in polytropic index than R32 and R410A. Thus, R290 is lower in theoretical discharge temperature than R32 and R410A. R290 with low GWP is used from a viewpoint of global warming prevention, which results in a still higher possibility that the slide portion of compressor 10 may be damaged in the defrosting mode as compared with the case where R32 or R410 is used.

Thus, in the first embodiment, the drive voltage of motor 12 in the defrosting mode is set to be smaller than the drive voltage of motor 12 in the normal mode, to thereby decrease the motor efficiency. Motor efficiency is represented as a value (%) obtained by dividing the compression work of compressor 10 for refrigerant by input power for motor 12. When the motor efficiency decreases, the work load converted into compression work is reduced from among the input power for motor 12, and then, the heat loss (the amount of heat generation) increases. In the defrosting mode, the amount of heat generated from motor 12 inside compressor 10 becomes larger than that in the normal mode.

Also, the refrigeration oil used in the first embodiment is lower in density than refrigerant and is non-compatible with liquid refrigerant. By using the refrigeration oil having such characteristics, the liquid refrigerant and the refrigeration oil are separated into two layers inside high-pressure shell-type compressor 10. In this case, the liquid refrigerant is an upper layer.

In the defrosting mode, the amount of heat generated from motor 12 is greater than that in the normal mode. Thus, evaporation of the liquid refrigerant is facilitated. Dilution of the refrigeration oil with liquid refrigerant is suppressed, and a decrease in lubricity of the refrigeration oil is suppressed. As a result, the stability of refrigeration cycle apparatus 100 can be improved.

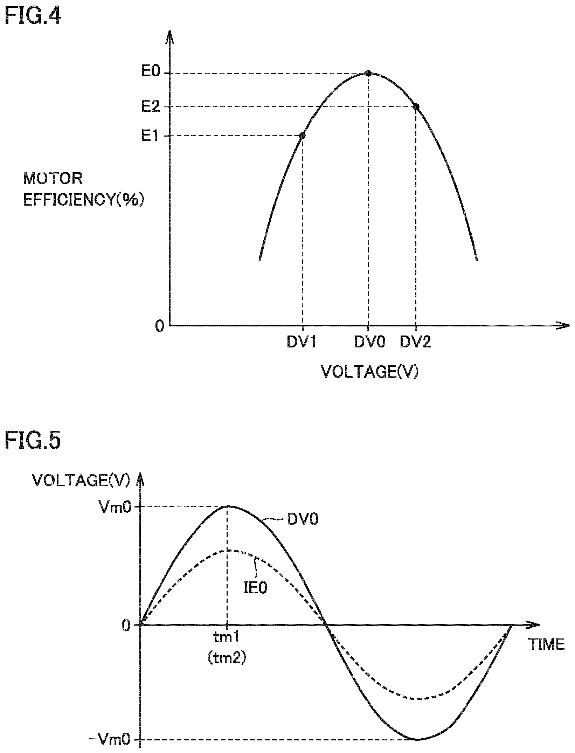

Fig. 4 is a graph showing the relation between the drive voltage and the motor efficiency of motor 12 at a constant rotation speed of motor 12. As shown in Fig. 4, when the drive voltage is DV0, the motor efficiency is a maximum value E0. In the normal mode, in order to maximize the compression work of compressor 10 so as to increase the air conditioning performance, the drive voltage is set at a value near DV0. In the first embodiment, the drive voltage in the defrosting mode is set at DV1 (< DV0) so as to decrease the motor efficiency corresponding to the drive voltage to be lower than motor efficiency E0.

Fig. 5 is a diagram collectively showing time charts of a drive voltage DV0 and induced electromotive force IE0 of motor 12 in the normal mode. In Fig. 5, voltage Vm0 is a maximum value of the magnitude of drive voltage DV0 in the normal mode. As shown in Fig. 5, almost no shift occurs between the phase of drive voltage DV0 (control phase) and the phase of induced electromotive force IE0 (rotation phase). Time tm1 at which induced electromotive force IE0 becomes maximum for the first time is almost the same as time tm2 at which drive voltage DV0 reaches a maximum value Vm0 for the first time.

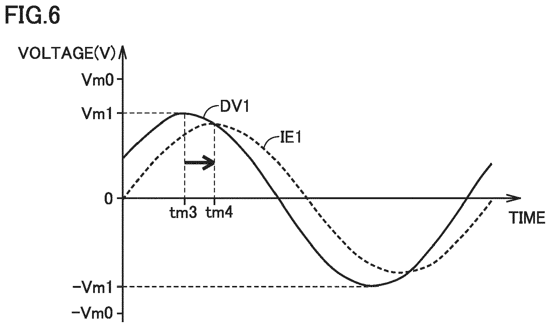

Fig. 6 is a diagram collectively showing time charts of drive voltage DV1 and induced electromotive force IE1 of motor 12 in the defrosting mode in the first embodiment. As shown in Fig. 6, a maximum value Vm1 of the magnitude of drive voltage DV1 in the defrosting mode is smaller than a maximum value Vm0 of the magnitude of the drive voltage in the normal mode. The average drive voltage in the defrosting mode is smaller than the average drive voltage in the normal mode. Furthermore, the phase of induced electromotive force IE1 delays from the phase of drive voltage DV1. Time tm4 at which induced electromotive force IE0 becomes maximum for the first time delays from time tm3 at which drive voltage DV0 reaches maximum value Vm1 for the first time. By field-weakening control, controller 5 increases the heat loss of motor 12 without decreasing the stability of the control for motor 12.

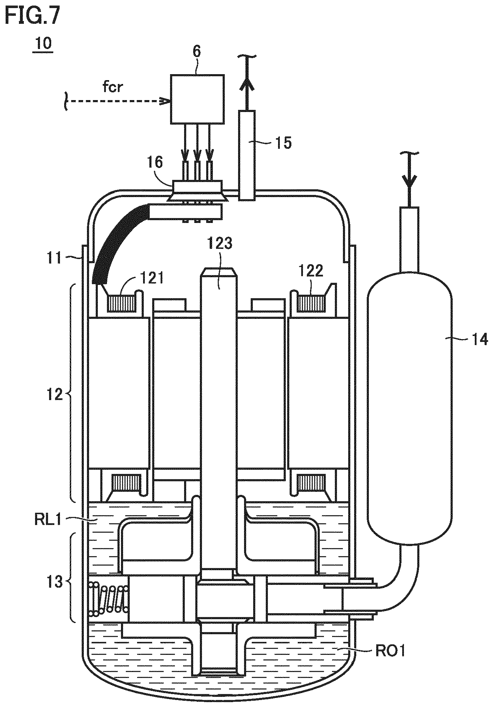

Fig. 7 is a diagram showing the internal structure of compressor 10 in Fig. 1. As shown in Fig. 7, compressor 10 includes a shell 11, motor 12, a rotary compression mechanism 13, a suction pipe 14 including a suction port, a discharge pipe 15, and a power supply terminal 16. Shell 11 houses motor 12 and rotary compression mechanism 13. Shell 11 has a bottom portion in which refrigeration oil RO1 for lubricating the slide portion of rotary compression mechanism 13 is stored. Compressor 10 may include a plurality of compression mechanisms.

Motor 12 receives drive power supplied from motor drive circuit 6 through power supply terminal 16. Motor 12 includes coils 121, 122 and a motor shaft 123. The drive power of motor 12 is transmitted to rotary compression mechanism 13 through motor shaft 123. Rotary compression mechanism 13 is driven by motor 12 to compress the refrigerant from suction pipe 14 and discharge the compressed refrigerant into the space in which motor 12 is disposed.

Refrigeration oil RO1 and liquid refrigerant RL1 are stored in shell 11. Liquid refrigerant RL1 is lower in density than refrigeration oil RO1. Refrigeration oil RO1 is non-compatible with liquid refrigerant RL1. Liquid refrigerant RL1 and refrigeration oil RO1 are separated into two layers. Liquid refrigerant RL1 as an upper layer is located closer to motor 12 than refrigeration oil RO1 as a lower layer. When the amount of heat generated from motor 12 increases in the defrosting mode, evaporation of liquid refrigerant RL1 is facilitated, and then, the gas refrigerant is discharged from discharge pipe 15. In motor 12, coils 121 and 122 mainly generate heat.

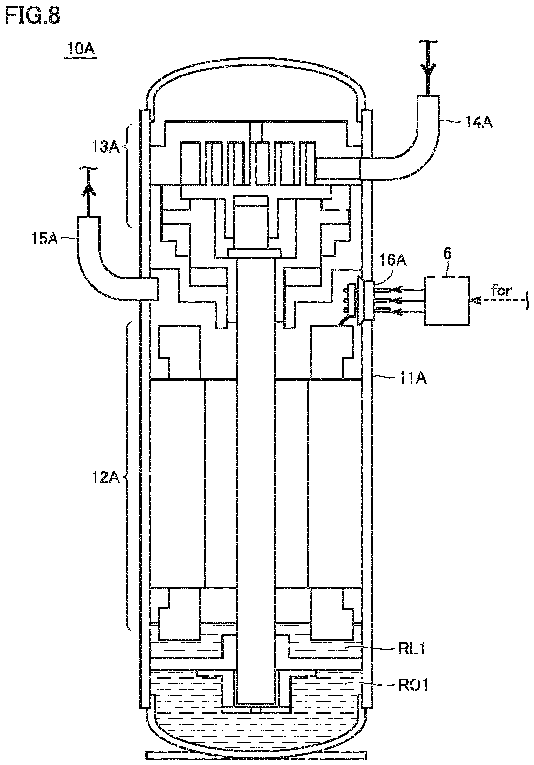

The compressor in the refrigeration cycle apparatus according to the first embodiment may include any type of compression mechanism as long as it is of a high-pressure shell type. For example, a compressor 10A including a scroll compression mechanism as shown in Fig. 8 may be included. Compressor 10A includes a shell 11A, a motor 12A, a scroll compression mechanism 13A, a suction pipe 14A including a suction port, a discharge pipe 15A, and a power supply terminal 16A. Shell 11A houses motor 12A and scroll compression mechanism 13A. Motor 12A receives electric power supplied from motor drive circuit 6 through power supply terminal 16A. Scroll compression mechanism 13A is driven by motor 12A to compress the refrigerant from suction pipe 14A and discharge the compressed refrigerant to the space in which motor 12A is disposed. When the amount of heat generated from motor 12A increases in the defrosting mode, evaporation of liquid refrigerant RL1 is facilitated, and then, the gas refrigerant is discharged from discharge pipe 15A.

As described above, the refrigeration cycle apparatus according to the first embodiment can improve the stability.

### Second Embodiment

In contrast to the first embodiment, in the second embodiment, the drive voltage of the motor in the compressor in the defrosting mode is set to be higher than that in the normal mode, thereby increasing the heat loss of the motor. Since the features other than the above are the same as those in the first embodiment, the description thereof will not be repeated.

Again referring to Fig. 4, in the second embodiment, a drive voltage DV2 in the defrosting mode is set to be higher than drive voltage DV0 in the normal mode. Motor efficiency E2 with respect to drive voltage DV2 is lower than motor efficiency E0 with respect to drive voltage DV0. Thus, the heat loss of the motor in the compressor increases in the defrosting mode, and evaporation of the liquid refrigerant in the compressor is facilitated. Then, dilution of the refrigeration oil with liquid refrigerant is suppressed, and a decrease in lubricity of the refrigeration oil is suppressed. As a result, the stability of the refrigeration cycle apparatus can be improved.

The maximum value of the magnitude of drive voltage DV2 in the defrosting mode is larger than the maximum value of the magnitude of the drive voltage in the normal mode. The average drive voltage in the defrosting mode is higher than the average drive voltage in the normal mode. Also, the phase of the induced electromotive force advances from the phase of drive voltage DV2. The time at which the induced electromotive force becomes maximum for the first time advances from the time at which drive voltage DV2 reaches a maximum value for the first time. Since the current required for controlling the motor can be suppressed by increasing drive voltage DV2, heat generation from the switching elements included in the inverter can be suppressed.

As described above, the refrigeration cycle apparatus according to the second embodiment can improve the stability.

### Third Embodiment

The third embodiment will be described with regard to the case where the carrier frequency of the inverter in the defrosting mode is set to be lower than that in the normal mode, thereby increasing the iron loss of the motor in the compressor driven by the inverter so as to increase the heat loss of the motor.

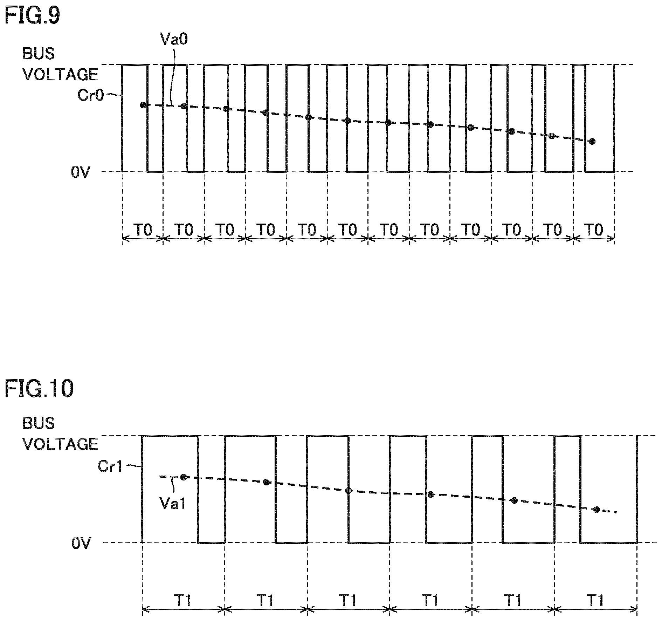

Fig. 9 is a waveform diagram showing a change in the drive voltage in the normal mode. Fig. 10 is a waveform diagram showing a change in the drive voltage in the defrosting mode. In Fig. 9, a square wave pulse Cr0 shows a change in the drive voltage while a dotted line Va0 shows a change in the average voltage. In Fig. 10, a square wave pulse Cr1 shows a change in the drive voltage while a dotted line Va1 shows a change in the average voltage. The average voltage shows an average value of one carrier period per unit time.

As shown in Figs. 9 and 10, a carrier period T1 in Fig. 10 is larger than a carrier period T0 in Fig. 10. Since the carrier frequency is the reciprocal of the carrier period, the carrier frequency in Fig. 10 is lower than the carrier frequency in Fig. 9. In general, the iron loss of the core material used in the motor of the compressor for air conditioning becomes minimum at a carrier frequency near 10 kHz. The carrier frequency generally used is about 5 kHz. Thus, for example, the carrier frequency is set at 5 kHz in the normal mode and set at 2.5 kHz in the defrosting mode, thereby allowing deterioration of the motor efficiency so as to increase the heat loss of the motor.

As described above, the refrigeration cycle apparatus according to the third embodiment can improve the stability.

### Fourth Embodiment

The fourth embodiment will be described with regard to the case where, in the defrosting mode, the torque is controlled such that the generated torque of the motor of the compressor follows the load torque of the compressor, thereby increasing the drive current flowing through the motor so as to increase the heat loss of the motor.

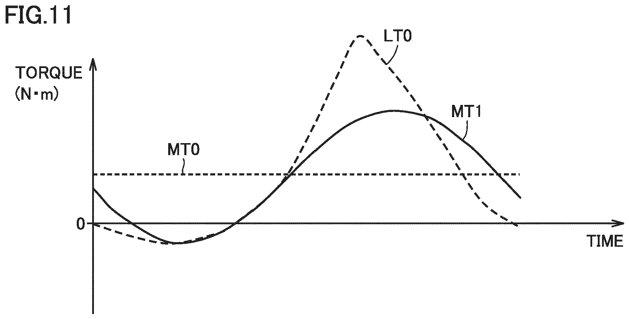

Fig. 11 is a diagram collectively showing time charts of a load torque LT0 of the compressor, a generated torque MT0 of the motor in the normal mode, and a generated torque MT1 of the motor in the defrosting mode. As shown in Fig. 11, generated torque MT0 of the motor is approximately constant in the normal mode. In the defrosting mode, generated torque MT1 changes so as to follow load torque LT0 of the compressor. By controlling the torque in the defrosting mode, the rotation speed variation of the compressor can be suppressed, so that the stability of the compressor is readily ensured. Furthermore, by suppressing excessive or insufficient torque, vibrations of the compressor can also be suppressed.

As described above, the refrigeration cycle apparatus according to the fourth embodiment can improve the stability.

The embodiments disclosed herein are also intended to be implemented in combination as appropriate within a consistent scope. It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

1, 3 heat exchanger, 2 expansion valve, 4 four-way valve, 5 controller, 6 motor drive circuit, 7 AC power supply, 10, 10A compressor, 11, 11A shell, 12, 12A motor, 13 rotary compression mechanism, 13A scroll compression mechanism, 14, 14A suction pipe, 15, 15A discharge pipe, 16, 16A terminal, 61 converter, 62 inverter, 63 current sensor, 100 refrigeration cycle apparatus, 121, 122 coil, 123 motor shaft, RL1 liquid refrigerant, RO1 refrigeration oil.

## Claims

1. A refrigeration cycle apparatus having a heating mode and a defrosting mode as an operation mode, the refrigeration cycle apparatus comprising:
a compressor in which refrigeration oil is stored, the compressor being configured to be driven by a motor;
a first heat exchanger;
a second heat exchanger;
an expansion valve; and
a controller configured to drive the motor, wherein
in the heating mode, refrigerant circulates sequentially through the compressor, the first heat exchanger, the expansion valve, and the second heat exchanger,
in the compressor, the refrigerant is smaller in density than the refrigeration oil, and the refrigerant in a liquid phase and the refrigeration oil are separated into two layers in the defrosting mode, and
the controller is configured to increase a heat loss of the motor in the defrosting mode more than the heat loss in the heating mode.

2. The refrigeration cycle apparatus according to claim 1, wherein
the compressor comprises
a shell in which the refrigeration oil is stored and the motor is housed, and
a compression mechanism configured to be driven by the motor to compress the refrigerant from a suction port of the compressor and discharge the refrigerant to a space in which the motor is disposed.

3. The refrigeration cycle apparatus according to claim 1 or 2, wherein
in the defrosting mode, the controller is configured to set a drive voltage of the motor to be lower than the drive voltage in the heating mode, to cause a phase of induced electromotive force of the motor to delay from a phase of the drive voltage.

4. The refrigeration cycle apparatus according to claim 1 or 2, wherein
in the defrosting mode, the controller is configured to set a drive voltage of the motor to be higher than the drive voltage in the heating mode, to cause a phase of induced electromotive force of the motor to advance from a phase of the drive voltage.

5. The refrigeration cycle apparatus according to claim 1 or 2, wherein
the controller is configured to
drive the motor in synchronization with a carrier frequency, and
set the carrier frequency in the defrosting mode to be lower than the carrier frequency in the heating mode.

6. The refrigeration cycle apparatus according to claim 1 or 2, wherein
the controller is configured to drive the motor to cause a generated torque of the motor to follow a load torque of the compressor in the defrosting mode.

7. The refrigeration cycle apparatus according to any one of claims 1 to 6, wherein
the refrigerant circulates in the defrosting mode in a direction reversed from a direction in which the refrigerant circulates in the heating mode.

8. The refrigeration cycle apparatus according to any one of claims 1 to 7, wherein
the refrigeration oil is non-compatible with the refrigerant.

9. The refrigeration cycle apparatus according to any one of claims 1 to 8, wherein
the refrigerant is smaller in polytropic index than HFC refrigerant.

10. The refrigeration cycle apparatus according to claim 9, wherein
the refrigerant comprises HC refrigerant.

11. The refrigeration cycle apparatus according to claim 10, wherein
the refrigerant comprises R290.
